# EUROPÄISCHE PATENTSCHRIFT

(11) **EP 3 642 699 B1**
(45) Veröffentlichungstag und Bekanntmachung des Hinweises auf die Patenterteilung: **28.02.2024**
(21) Anmeldenummer: 18724196.3
(22) Anmeldetag: 08.05.2018
(51) Int. Cl.: G06F 3/0354, G06F 3/03, G06V 30/142

(54) **ELEKTRONISCHES GERÄT ZUR ERZEUGUNG ANALOGER ABSTRICHE UND ZUR DIGITALEN SPEICHERUNG DER ANALOGEN ABSTRICHE, SOWIE EINGABESYSTEM UND VERFAHREN ZUR DIGITALISIERUNG ANALOGER AUFZEICHNUNGEN**
ELECTRONIC DEVICE FOR GENERATING ANALOGUE STROKES AND FOR DIGITALLY STORING THE ANALOGUE STROKES, AND AN INPUT SYSTEM AND METHOD FOR DIGITISING ANALOGUE RECORDINGS
APPAREIL ÉLECTRONIQUE DESTINÉ À LA GÉNÉRATION DE BALAYAGES ANALOGIQUES ET AU STOCKAGE NUMÉRIQUE DES BALAYAGES ANALOGIQUES AINSI QUE SYSTÈME DE SAISIE ET PROCÉDÉ DE NUMÉRISATION DES ENREGISTREMENTS ANALOGIQUES

(30) Priorität: 22.06.2017 DE 102017006740
(43) Veröffentlichungstag der Anmeldung: 29.04.2020
(73) Patentinhaber: STAEDTLER SE, 90427 Nürnberg (DE)
(72) Erfinder: WEIDLER, Matthias, 90451 Nürnberg (DE); FREIBERT, Andreas, 91094 Langensendelbach (DE); RAMPP, Alexander, 91154 Roth (DE); PETERS, Dirk, 39114 Magdeburg (DE); GROHS, Johannes Philipp, 91099 Poxdorf (DE)
(86) Internationale Anmeldenummer: PCT/EP2018/061805
(87) Internationale Veröffentlichungsnummer: WO 2018/233920

(56) Entgegenhaltungen:
- WO-A2-02/058029
- DE-A1-102014 106 838
- US-A1- 2013 321 356

## Beschreibung

Die Erfindung betrifft ein elektronisches Gerät zur Erzeugung analoger Abstriche und zur digitalen Speicherung der analogen Abstriche.

Weiter betrifft die Erfindung ein Eingabesystem und Verfahren zur Verarbeitung analoger Aufzeichnungen.

Geräte, System und Verfahren zur Erzeugung analoger Abstriche, sowie System und Verfahren zu deren Digitalisierung sind prinzipiell bekannt.

So werden analoge Aufzeichnungen auf einer Papierunterlage erstellt und die Strichbewegungen des Anwenders mit der integrierten Infrarotkamera erfasst und aufgezeichnet. Die aufgezeichneten Daten können sodann auf einen Rechner transferiert werden.

Nachteilig ist es hierbei jedoch, dass die Papierunterlage als ein sogenanntes dotiertes, mit einem in irgendeiner Form versehenes Punktmuster versehenes Papier handelt.

Unabhängig davon, dass es sich bei der Aufzeichnungsunterlage um ein Spezialpapier handelt, ist es als nachteilig anzusehen, dass das Punktemuster erkennbar ist und den Gesamteindruck der Aufzeichnung beeinträchtigt.

Weiter sind Systeme zur Umwandlung von analogen Aufzeichnungen in digitale Daten bekannt, bei welchen am Rand der Aufzeichnungsunterlage eine Empfängereinheit angebracht ist und am Aufzeichnungsgerät eine Sendereinheit vorgesehen ist. Über diese Kombination von Sender und Empfänger kann zu jedem Zeitpunkt die Spitze des Aufzeichnungsgerätes über XY-Koordinaten beschrieben bzw. verortet werden.

Zwar wird in der vorstehenden Ausführung kein dotiertes Spezialpapier benötigt, jedoch eine mehrteilige Sender- und Empfängereinheit, wobei zumindest die Empfängereinheit vor jeder Aufzeichnung in konstantem Abstand zum Papier gehaltert werden muss.

Des Weiteren sind zum simultanen Speichern von analogen und digitalen Daten Systeme bekannt, die ein sogenanntes Sensorboard beinhalten, über welchem ein Papierblatt angeordnet wird. Mit einen analogen Schreibgerät werden auf dem Papierblatt analoge Aufzeichnungen erstellt, welche gleichzeitig über das Sensorboard digital erfasst und gespeichert werden können.

Hierbei ist es als nachteilig anzusehen, dass ein spezielles Sensorboard vorhanden sein muss und zudem das Papier stets fixiert sein muss, da sonst die digitalen Aufzeichnungen nicht dem analogen Vorlagen entsprechen, sich beispielsweise überlappen.

Als weiterer Nachteil bei einigen der bekannten Lösungen ist es zudem als nachteilig anzusehen, dass es teilweise nicht möglich ist, bei zeitlich versetzter Benutzung Erweiterungen oder Ergänzungen von älteren analogen Aufzeichnungen den aufgezeichneten digitalen Daten korrekt zuzuordnen.

In der WO 02/058029 A2**,** der DE 102014106838 A1 und der US 2013/321356 A1 werden Systeme zur Digitalisierung von handschriftlichen Aufzeichnugen gezeigt und beschrieben.

Zudem findet in der WO 02/058029 A2 eine Verortung des Aufzeichnungsträgers über zwei Referenzpunkte statt und eine sich anschließende Datenerfassung erfolgt dann über Interpolation, Extrapolation und Triangulation.

Ein elektronischer Schreibstift mit Schreibpositionserkennung ist in der DE 102014106838 A1 beschrieben, wobei eine digitale Recheneinheit zur Erstellung einer Kartierung eines Schreibsubstrates konfiguriert ist, um Abbildungsdaten zu verarbeiten und eine Absolutreferenzierung zu realisieren.

Auch die US 2013/0321356 A1 zeigt und beschreibt ein System zur Digitalisierung von handschriftlich erzeugten Zeichen. Das System weist unter Anderem ein Kamerasystem zur Erfassung der analogen Zeichen auf. Eine Verortung des Aufzeichnungsträgers erfolgt über die Erfassung von vier Punkten, die eine Fläche aufspannen.

Nachteilig ist es bei dem vorstehend genannten Stand der Technik anzusehen, dass eine absolute Verortung des Aufzeichnungsträgers entweder ungenau, undefiniert und/oder umständlich anzusehen ist.

**Aufgabe** der Erfindung ist es daher, ein elektronisches Gerät sowie ein Eingabesystem zu schaffen, das die eingangs genannten Nachteile nicht aufweist und mit welchem es ermöglicht wird, die mit einem konventionellen Schreibgerät erzeugten analogen Aufzeichnungen auf einen beliebigen Aufzeichnungsträger zu digitalisieren und einen Aufzeichnungsträger einfach und definiert zu verorten. Weiter ist es Aufgabe der Erfindung, ein Eingabesystem zu schaffen, mit dem analoge Aufzeichnungen in eine digitale Form überführt werden, um diese nachfolgend zu bearbeiten, sortieren, kategorisieren, zu verteilen und/oder über Suchfunktionen wiederauffindbar abzuspeichern.

Des Weiteren ist es Aufgabe der vorliegenden Erfindung, ein Verfahren zu schaffen, welches es ermöglicht, die mit einem elektronischen Gerät erzeugten analogen Aufzeichnungen bzw. handschriftlichen Notizen oder Skizzen auf einem beliebigen Aufzeichnungsträger möglichst einfach zu digitalisieren.

Diese Aufgabe wird mit den Merkmalen gemäß Anspruch 1, 8 und 9 gelöst.

Unter einem elektronischen Gerät ist nachfolgend ein Schreib- und/oder Eingabegerät zu verstehen, welches zum einen Komponenten eines konventionellen Schreib-, Zeichen- und/oder Malgerätes beinhaltet, zur Erstellung von analogen Aufzeichnungen. Konventionelle Schreibgeräte weisen in der Regel mindestens eine Mine und/oder anderes farbabgebendes Auftragsmedium auf, das eine Schreib- oder Aufzeichnungsspitze aufweist.

Zum Anderen weist das elektronische Gerät zusätzlich elektronische Komponenten und Softwaremodule auf, die benötigt werden, um die analogen Aufzeichnungen zu erfassen und als digitale Daten zu erfassen, zu bearbeiten, zu speichern und zu übermitteln.

Das erfindungsgemäße Gerät betrifft ein elektronisches Gerät zur Erzeugung analoger Abstriche und zur digitalen Speicherung der analogen Abstriche, wobei das Gerät Komponenten eines Schreib- Zeichen- und/oder Malgerätes zur Erstellung analoger Aufzeichnungen auf einem Aufzeichnungsträger aufweist, wobei das Gerät elektronische Komponenten und Software zur Erweiterung des Gerätes zum digitalen Schreib- und/oder Eingabegerät aufweist, wobei das Gerät mindestens eine Verortungseinheit aufweist, die eine Verortung zwischen dem Gerät und einem Aufzeichnungträger ermöglicht. Weiter umfasst das Gerät mindestens eine Bewegungserfassungseinheit, wobei die Bewegungserfassungseinheit die Bewegungen des Gerätes und damit erzeugten analogen Aufzeichnungen auf einem Aufzeichnungsträger digital erfasst und wobei die Bewegungserfassungseinheit als ein Lasertracker, auch unter "Laser-Speckle-Motion-Tracker" bekannt ausgebildet ist.

Unter elektronischen Komponenten und Software sind mindestens ein IMU, ein Kamerabezugssystem, ein Mikrocontroller, ein Lasertracker und eine Auswertesoftware umfasst, wobei die elektronischen Komponenten und Software über eine Platine und/oder sonstige leitfähige Verbindungen miteinander in Verbindung stehen oder verbunden sind.

Der Lasertracker ist als XY-Tracker ausgebildet, wobei der XY-Tracker eine 2D-Erfassungseinheit ist, zur Erfassung der Daten (X, Y) in einem karthesischen Koordinatensystem (X, Y) als eine Funktion der Zeit (t).

Der Lasertracker kann auch als XYZ-Tracker vorliegen, wobei der XYZ-Tracker als eine 3D-Erfassungseinheit ausgebildet ist, zur Erfassung der Daten (X, Y, Z) in einem orthogonalen Koordinatensystem (X, Y, Z) als eine Funktion der Zeit (t).

Die Verortungseinheit beinhaltet mindestens ein IMU, ein Kamerabezugssystem, einen Mikrocontroller und eine Auswertesoftware zur absoluten Verortung des Gerätes gegenüber dem Aufzeichnungsträgers. Die Verortung erfolgt als Verortung von mindestens drei Kantenlinien des Aufzeichnungsträgers für die analogen Aufzeichnungen.

Die Auswertesoftware ist/bildet eine Sensor-/Datenfusionseinheit , wobei die Daten der Verortungseinheit und der Bewegungserfassungseinheit durch die Sensor-Datenfusionseinheit zusammengeführt werden.

Weiter umfasst das erfindungsgemäße Gerät als elektronische Komponente einen Abstandsmesser zur Erfassung des Abstandes (h) des Gerätes von einem Aufzeichnungsträger, wobei der Abstand (h) als eine Funktion der Zeit (t) vorliegt. Der Abstandsmesser liegt als ein lasergestützter Abstandsmesser vor.

Das erfindungsgemäße Gerät weist als weitere elektronische Komponenten und/oder Software mindestens einen Prozessor, einen Sensor, eine Datenspeichereinheit, eine Energiequelle, eine Ladekontrolle, ein Spiegelelement, einen On-/Off-Schalter, einen Signalgeber, ein Mikrofon und/oder eine Datenübertragungseinheit auf.

Der mindestens eine Sensor liegt als Kontaktsensor vor, der als ein Drucksensor und/oder Dehnmessstreifen zur Aktivierung des Gerätes bei Kontakt mit dem Aufzeichnungsträger ausgebildet ist.

Die Datenübertragungseinheit ist ein Kommunikationsbaustein zur Übertragung von erfassten und bearbeiteten Daten an ein digitales Endgerät. Eine derartige Einheit kann eine Bluetooth-Einheit, WLAN-Kopplung oder Kabelverbindung sein.

Ein ggf. im Gerät integrierter Signalgeber kann als ein akustischer und/oder optischer Signalgeber ausgebildet sein.

Mit dem erfindungsgemäßen elektronischen Gerät können analoge Aufzeichnungen auf Aufzeichnungsträgern automatisch digitalisiert werden. Es hat sich bei Nutzung des Eingabesystem als vorteilhaft herausgestellt, dass der Aufzeichnungsträger kein spezielles Medium, wie beispielsweise dotiertes Papier, sein muss. Als Aufzeichnungsträger kann Papier in loser oder in gebundener Form, als Spiralblock, oder Notizblock vorliegen. Ebenso kann als Aufzeichnungsträger eine Folie oder andere Materialien herangezogen werden. Hierbei ist es als vorteilhaft anzusehen, wenn der Aufzeichnungsträger eine rechteckige Form aufweist und geradlinig berandet ist.

Das vorstehende bezeichnete Eingabesystem beinhaltet mindestens ein elektronisches Gerät, einen Aufzeichnungsträger und ein digitales Endgerät.

Einige der vorstehend genannten Komponenten werden nachfolgend beschrieben.

Lasertracker sind auch unter dem Begriff Mousetracker, XY-Tracker, XYZ-Tracker und/oder "Laser-Speckle-Motion-Tracker" bekannt.

XY-Tracker oder XYZ-Tracker erkennen die Bewegungen der Schreibspitze auf dem Aufzeichnungsmedium in Bezug zur vorherigen Position mit einer hohen und zeitlichen Auflösung. Die Messungen basieren hierbei auf der Veränderung des Laserspecklemusters bei Bewegungen über eine reflektierende Oberfläche.

Das Funktionsprinzip der Aufzeichnung Bewegungen des Lasertrackers entspricht einer optischen Computermaus, wie aus dem Stand der Technik bekannt. Hierbei werden Bewegungen/Feinbewegungen aufgezeichnet, beispielsweise bei der Interaktion mit einem Computer. Erfasst werden Bewegungen in 2D und/oder 3D. Neben den Bewegungen können mit dem Lasertracker auch Clicks und/oder Verweildauer an bestimmten Positionen des Aufzeichnungsmediums erfasst werden. Es hat sich in überraschender Weise gezeigt, dass der Lasertracker einen wesentlichen Anteil zur Lösung der Aufgabe beiträgt.

Unter IMU (Inertial Measurement Unit) ist eine räumliche Kombination mehrerer Inertialsensoren wie Beschleunigungssensoren und Gyroskop-/Drehratensensoren zu verstehen. IMU stellt die sensorische Messeinheit eines Trägheitsnavigationssystems dar und dient der Bewegungs- und Lage-Detektion sowohl in der Ebene als auch im Raum. Allgemein dient der IMU somit der Messung der Orientierung eines Gerätes im Raum.

Drucksensoren dienen in der vorliegenden Anmeldung der Detektierung, ob sich die Schreibspitze des Gerätes auf dem Aufzeichnungsträger befindet oder nicht. Weiter kann mit einem Drucksensor Druckkraft der Schreibspitze auf dem Aufzeichnungsträger besimmt werden, um z.B. verschiedene Linienstärken in Abhängigkeit vom Druck zu erfassen und in die erfassten Daten zu integrieren.

Um ein Verfahren der automatischen Digitalisierung von analog bzw. handschriftlich erzeugten Aufzeichnungen zu ermöglichen, ist das analoge Schreib- oder Zeichengerät mindestens mit vorstehend beschriebenen Zusatzkomponenten ausgestattet.

Um das Verfahren der Digitalisierung analoger Aufzeichnungen zu gewährleisten, beinhaltet das elektronische Gerät eine Software Komponente, welche die Daten der Sensoren und/oder elektronischen Komponenten erfasst und verarbeitet. Für die Ver- und Bearbeitung der Daten ist eine sogenannte embedded Software im Mikroprozessor zuständig.

Je nach Ausgestaltung/Funktionsumfang der embedded Software, ist der Umfang der Datenverarbeitung geregelt, d.h. es wird dadurch festgelegt, ob die Daten am elektronischen Gerät selbst bzw. direkt, oder an einem digitalen Endgerät bearbeitet werden.

Mittels einer Software-Applikation, welche auf irgend digitalen Endgeräten des Benutzers installiert ist und als digitales Ausgabe- und Bearbeitungsmedium dient, können die vom Elektronischen Gerät gelieferten Daten weiterbearbeitet werden.

Sollte das elektronische Gerät über eine Display-Einheit verfügen, so kann die Software-Applikation auch im Gerät direkt untergebracht sein, um bereits im elektronischen Gerät die erfassten Daten weiter zu verarbeiten und erst dann an ein digitales Endgerät zu übermitteln.

Nachfolgend wird das erfindungsgemäße Verfahren in den wesentlichen 8 Prozessschritten dargelegt.

### Prozessschritt 1: Aktivierung des elektronischen Gerätes;

Die kann beispielsweise über einen On/Off-Schalter umgesetzt werden, um die elektronischen Komponenten mit elektrischer Energie zu versorgen.

### Prozessschritt 2: Kalibrierung des IMU-Sensors;

Kalibrierung des IMU-Sensor zum Kamerabezugssystem.

Dies geschieht über die absolute Verortung der Kamera/Kamerabezugssystem. Hierzu ist es notwendig, dass mindestens zwei Ecken, und somit mindestens drei Kanten oder mindestens Kantenabschnitte des mit analogen Aufzeichnungen zu versehenden Aufzeichnungsträgers für die Kamera erkennbar sind. Diese zwei Ecken (und somit drei Kanten) werden vom Kamerabezugssystem erfasst und abgespeichert. Diese Verortung/Positionsbestimmung dient der Bestimmung der Drehung des Blattes in Abhängigkeit von der Zeit (t).

Zur Ausführung dieses Prozessschrittes sind mindestens eine Kamera, IMU, Mikrocontroller und eine Auswertesoftware nötig.

### Prozessschritt 3: Stift auf Papier;

Das elektronische Gerät erkennt den Status "Stift auf Papier".

Der Status "Stift auf Papier" kann mittels Drucksensor, Dehnmessstreifen und/oder Mikrocontroller erzeugt werden.

### Prozessschritt 4: Erfassung von Bewegungen des Gerätes;

Feinbewegungen des Gerätes bzw. dessen Schreibspitze werden mit XY-Tracker aufgezeichnet. Sobald der Aufzeichnungsträger absolut verortet ist, können die Bewegungen /Feinbewegungen der Schreibspitze relativ zum Aufzeichnungsträger während des analogen Schreib-/Zeichenvorganges über den XY-Tracker verfolgt und als Daten (x, y) in getakteten Zeitabständen (t) abgegriffen, verarbeitet und digitalisiert gespeichert werden.

IMU, XY-Tracker, Mikrocontroller und Auswertesoftware sind hierbei aktiviert.

### Prozessschritt 5: Absolute Verortung der Lage der Stiftspitze auf dem/im Koordinatensystem des Aufzeichnungsträgers;

Es ist nötig, dass eine absolute Verortung der Stiftspitze auf dem Auftragsmedium erfolgt, da die Position (X,Y) des elektronischen Gerätes im Koordiatensystem des Aufzeichnungsträgers bekannt sein muss.

Hierzu muss mindestens eine Ecke und damit zwei anliegende Kanten des Aufzeichnungsträgers für das Kamerasystem sichtbar sein, um die Position (X, Y) des Gerätes/Stiftes zu erfassen.

Z.B. müssen zur linken oberen Ecke des Aufzeichnungsträgers die anliegende linke Blattkante und die ebenfalls anliegende obere Blattkante erkannt werden.

Das System ist einsatzfähig, wenn zum einen der IMU-Sensor kalibriert ist und der Status "Stift auf Papier" erkannt ist.

Benötigt werden hierzu Kamera, Mikrocontroller, IMU und Auswertesoftware.

### Prozessschritt 6: Fusionierung der Sensordaten

In einem weiteren Verfahrensschritt erfolgt eine Fusionierung der Sensordaten, wodurch es ermöglicht wird, dass die aufgezeichneten Feinbewegungen der Stiftspitze beim analogen Schreib- bzw. Zeichenvorganges mit Hilfe der im Prozessschritt 5 berechneten Daten auf dem Aufzeichnungsträger verortet werden. Für diesen Verfahrensschritt ist es notwendig, dass sowohl die Feinbewegungen der Stiftspitze auf dem Aufzeichnungsträger mittels XY-Tracker korrekt verfolgt und aufgezeichnet werden, als auch dass die absolute Verortung der Stiftspitze auf dem Aufzeichnungsträger durchgeführt wurde.

### Prozessschritt 7: Abspeicherung von Bilddaten

Die fusionierten Sensordaten der Feinbewegungen, welche im Status "Stift auf Papier" aufgezeichnet und digitalisiert wurden, werden nahezu zeitgleich von einer Auswertesoftware als zeitabhängiger optisch dargestellter Datensatz gespeichert.

### Prozessschritt 8: Datensätze werden an ein beliebiges Endgerät übermittelt, um dort rekonstruiert, weiter bearbeitet, aufbereitet und erneut gespeichert zu werden.

In den vorstehenden erfinderischen Verfahren mit den einzelnen Prozessschritten hat es sich zudem als vorteilhaft herausgestellt, wenn in
- Prozessschritt 2 eine zweite Kamera eingesetzt wird, um eine zuverlässige kontinuierliche (zeitabhängige) Bestimmung der Lage des Gerätes zum Aufzeichnungsmedium zu erreichen. Es hat sich bei der Verwendung zweier Kameras als vorteilhaft herausgestellt, wenn die Kameras untereinander derart positioniert werden, dass jeweils durch eine Kamera mindestens eine Blattkante erfasst werden kann.
- Prozessschritt 2 durch die Verwendung einer zweiten Kamera die Bewegungen des elektronischen Gerätes und des Aufzeichnungsträgers unterschieden werden können.
- Prozessschritt 2 im IMU ausschließlich Daten eines Beschleunigungssensors sowie Daten eines Gyroskop-Sensors in die Sensordatenfusion einzubeziehen, da der Magnetfeldsensor des IMU zu starken äußeren Einflüssen wie Erdmagnetfeld, Mobiltelefone oder Bildschirmen ausgesetzt ist. Damit kann bei der Sensorfusionierung eine genauere Bestimmung der Orientierung zum Aufzeichnungsträger gewährleistet werden.
- Prozessschritt 4 wenn XY-Tracker und Laser möglichst nahe an der Gerätelängsachse positioniert sind. Dies führt zu einer Verringerung des Winkels zwischen Laser und XY-Tracker sowie der Stiftachse/Stiftspitze, wodurch bei vom Aufzeichnungsträger abgehobenen Schreibspitze störungsfreier Betrieb bei hoher Schärfe und geringer Positionsabweichung der Daten möglich ist. Es ist daher von Vorteil, wenn der Winkel an der Stiftspitze, aufgespannt von Laser und XY-Tracker gegen 0 geht.
- Prozessschritt 4 einen lasergestützten Abstandsmesser zum Erfassen des Abstandes (h) zwischen Aufzeichnungsträger und Stiftspitze ausgebildet ist, zur exakten Berechnung oder zur Extrapolation höhenbedingter Verzerrungen/Ungenauigkeiten, da die Trackerdaten eine Funktion des Abstandes (h) sind. Der Detektor zur Abstandsmessung besitzt eine leicht versetzte Achse zur optischen Achse des Lasers und des XY-Trackers, um den Abstand mittels Triangulation berechnen zu können.
- Prozessschritt 5 das Sichtfeld der Kamera(s) vergrößert ausgebildet ist. Hierzu ist die mindestens eine Kamera mit Weitwinkelobjektiven ausgerüstet. Zudem hat es sich als vorteilhaft herausgestellt, wenn die Kamera im hinteren Bereich des Gerätes angeordnet ist, bzw. der Abstand Stiftspitze zu Kamera möglichst groß gewählt ist.

Nachfolgend werden die Daten in/mittels einer Software-Applikation (APP) auf ein beliebiges digitales Endgerät des Anwenders gesendet, rekonstruiert und dargestellt bzw. bildhaft dargestellt. Am/mit dem Endgerät können die Daten ggf. weiter mittels weiterer Software-Applikationen bearbeitet und als bearbeitete Daten erneut und modifiziert gespeichert werden.

Beispielhaft sei die Konvertierung von handschriftlichen Aufzeichnungen mittels optischer Zeicherkennung (OCR = Optical character recognition) und/oder elektronischer Texterkennung (ICR) genannt.

Das Ziel, die analogen Aufzeichnungen auf universellen Aufzeichnungsträgern auf einem digitalen Schreib- und Eingabegerät und/oder auf einem digitalen Endgerät/Ausgabemedium digital zu visualisieren, wurde durch vorstehendes Verfahren erreicht. Beispielsweise können die digitalisierten Daten über eine Applikationssoftware auf PC/Notebook/Tablet/Smartphone gespeichert werden. Im elektronischen Gerät aufgezeichnete Sensordaten können durch ein Ausgabemedium in Form eines elektronischen Endgerätes als digitale

Rekonstruktionen wiedergegeben werden. Außerdem können diese digitalen Rekonstruktionen der analogen Eingabe mittels der Applikationssoftware auf einem Ausgabegerät/Endgerät digital verändert und/oder weiterbearbeitet werden.

Es hat sich in überraschender Weise gezeigt, dass durch das aufgezeigte Verfahren dem Benutzer die Möglichkeit eröffnet wird, Informationen effizient zu speichern, zu kategorisieren, zu nutzen und zu verarbeiten und Suchfunktionen zugänglich gemacht.

Das erfindungsgemäße Verfahren überführt - ohne weitere Hilfsmittel und Prozessschritte für den Anwender - diese analogen Eingaben simultan in eine digitale Form bzw. Ausgabeform.

Außerdem werden mit dem erfindungsgemäßen Verfahren automatisch Meta-Daten des Schreib-, Zeichen, oder Malvorganges des Benutzers aufgezeichnet, verarbeitet und in einem Ausgabe-Medium angezeigt. Meta-Daten können bspw. der Ort und Zeitpunkt der analogen Aufzeichnung sowie der individuelle, persönliche und eindeutige Bewegungsschwung beim Schreiben, Zeichnen und/oder Malen sein. Als Beispiele für Metadaten können der Druck der Schreibspitze auf der Schreibunterlage, die Verweildauer der Schreibspitze in bestimmten Situationen, die Geschwindigkeit der Aufzeichnungserstellung und Richtung der Schreibspitze beim Schreiben, Zeichnen und/oder Malen sein.

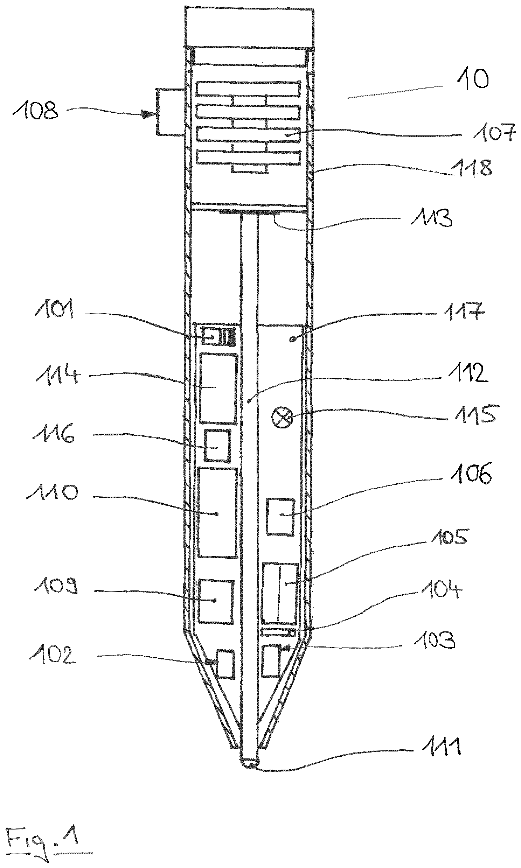

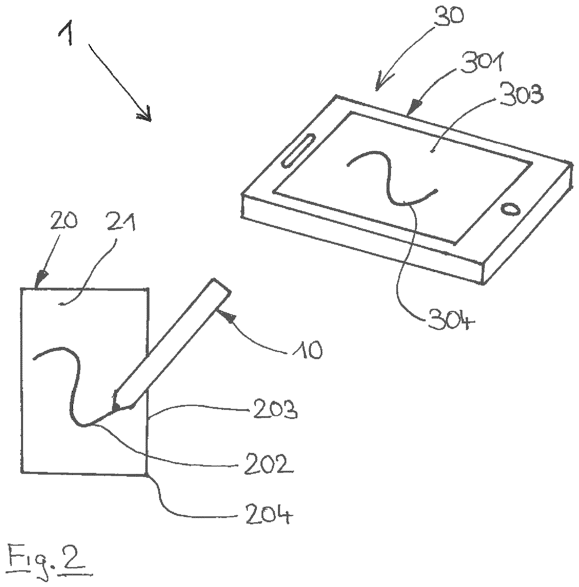

Die Erfindung soll nachfolgend anhand der **Figuren 1** **und** **2** weiter erläutert werden.
**Figur 1****:** Schnitt durch ein erfindungsgemäßes Eingabegerät;
**Figur 2****:** Erfindungsgemäßes Eingabesystem;

**Figur 1** zeigt ein erfindungsgemäßes elektronisches Gerät 10, mit welchem analoge bzw. handschriftlich erzeugte Aufzeichnungen (202) generiert werden können.

Um ein Verfahren der automatischen Digitalisierung von analog bzw. handschriftlich erzeugten Aufzeichnungen (202) zu ermöglichen, wird das analoge Schreib- oder Zeichengerät mit Sensoren und weiteren elektronischen Komponenten ausgestattet, sodass es zudem als digitales Schreib- und/oder Eingabegerät 10 fungiert.

Hierzu weist das Gerät 10 Komponenten oder elektronische Komponenten, wie beispielsweise mindestens ein IMU 102, XY-Tracker 103, Kamera 108, Drucksensor 113, Mikroprozessor/-controller 110, Speichereinheit 114, Energiequelle 107, Datenübertragungseinheit 109, akustisches Signalgerät 115, Mikrofon 116, Ladekontrolle 106 und ggf. weitere Komponenten auf, um die analog erzeugten Aufzeichnungen (202) zu digitalisieren. Weiter ist eine Einheit zur lasergestützten Abstandsmessung 105 integriert, um die Tracker-Daten, welche auch eine Funktion des Abstandes zum Aufzeichnungsträger darstellen zu korrigieren, für den Fall dass die Schreibspitze 111 den Kontakt zum Aufzeichnungsträger (202) verliert, wird automatisch die Abstandsmessung pro Zeiteinheit (t) durch den Drucksensor aktiviert.

Eine für die Erfindung nötige Einheit bildet die optische Einheit des elektronischen Gerätes 10, bestehend aus XY-Tracker 103, Einheit zur lasergestützten Abstandsmessung 105 und Spiegelelement 104.

Es hat sich als besonders vorteilhaft herausgestellt, wenn der XY-Tracker 103 zur Erfassung von Bewegungen (X, Y- Koordinaten) spitzennah ausgebildet oder befestigt ist, da auf diese Weise eine Unschärfe des sich beim Schreiben verändernden Winkels der Schreibgerätelängsachse zum Aufzeichnungsträger gegen null geht/konvergiert.

Es hat sich weiter gezeigt, dass die Einheit zur Abstandmessung 105 und der XY-Tracker 103 einen gemeinsamen Laser (105) nutzen können.

In einem fixierten Winkel ist ein kleines Spiegelelement 104 über dem CCD Sensorfeld (Charge-Coupled Device/lichtempfindliches Bauelement) des XY-Trackers 103 positioniert. Über eine kleine Öffnung im Spiegelelement 104 kann der Laserstrahl das "Sichtfeld"/CCD Sensorfeld des XY-Trackers beleuchten. Hierbei fallen die optische Achse des Lasers und des XY-Trackers zusammen. Ein Detektor zur Abstandmessung besitzt eine leicht versetzte Achse, um so einerseits den Abstand mittels Triangulation und/oder andererseits die Phase messen zu können. Nicht dargestellt und beschrieben ist die Alternative, bei der sowohl Einheit zur Abstandmessung als auch XY-Tracker einen eigens zugeordneten Laser nutzen. Als Energiequelle können Batterien oder aufladbare Akkumulatoren vorgesehen sein, deren Ladezustand über eine Ladekontrollleuchte visualisiert werden kann. Vorstehend ausgeführte Komponenten sind mit der im Gehäuse 118 gehalterten Grundplatte/Platine 117 elektrisch leitfähig montiert/kontaktiert oder zumindest über andere leitfähige Verbindungen, wie Kabel verbunden. Um das Gerät im Ruhezustand stromlos zu schalten, ist ein On-/Off-Schalter integriert. Ebenso ist im Gehäuse 118 des Gerätes 10 ein Schreibmedium 112 gehaltert, hier beispielhaft als Kugelschreibermine ausgebildet, um mit der Schreibspitze 111 auf einem Aufzeichnungsträger (20) eine analoge Aufzeichnung (202) zu erzeugen.

In der **Figur 2** ist ein Eingabesystem 1 dargestellt, welches sich mindestens aus einem elektronischen Gerät 10, einem Aufzeichnungsträger 20 und einem digitalem Endgerät 30 zusammensetzt.

Hierbei ist das elektronische Gerät 10 gemäß Figur 1 aufgebaut. Das digitale Endgerät 30 kann beispielhaft als ein Tablet 301 oder alternativ als Computer mit Bildschirm (302) ausgebildet sein. Auf dem Display 300 oder Bildschirm 300 des Endgerätes 30 findet sich die digitale Aufzeichnung 304 wieder, die in einem ersten Schritt als analoge Aufzeichnung 202 mittels dem elektronischem Gerät 10 auf der Aufzeichnungsfläche 201 des Aufzeichnungsträger 20 erzeugt wurde.

In der dargestellten Form erfolgt der Datentransfer zwischen elektronischem Gerät und Endgerät in kabelloser Form, wie beispielsweise über Bluetooth.

Ein Datentransfer über eine USB-Kabelverbindung ist prinzipiell ebenso möglich. Der Aufzeichnungsträger 20 wird durch die Kante 203 und Ecke 204 begrenzt bzw. eindeutig festgelegt.

### Positionsliste

- **1**: **Eingabesystem**
10 Elektronisches Gerät
101 Schalter an/aus
102 IMU
103 XY-Tracker
104 Spiegelelement
105 Einheit zur lasergestützten Abstandsmessung
106 Ladekontrolle
107 Energiequelle
108 Kamera
109 Datenübertragungseinheit
110 Mikroprozessor, -controller
111 Schreibspitze
112 Schreibmedium
113 Drucksensor
114 Speichereinheit
115 Signalgeber
116 Mikrofon
117 Grundplatte/Platine
118 Gehäuse/Schaft
20 Aufzeichnungsträger
21 Aufzeichnungsfläche
202 analoge Aufzeichnung
203 Seitenkante(n)
204 Ecke(n)
30 digitales Endgerät
301 Tablet
303 Display
304 digitale Aufzeichnung

## Patentansprüche

1. **Elektronisches Gerät** (10) zur Erzeugung analoger Abstriche und zur digitalen Speicherung der analogen Abstriche,
wobei das Gerät (10) Komponenten eines Schreib- Zeichen- und/oder Malgerätes zur Erstellung analoger Aufzeichnungen (202) auf einem Aufzeichnungsträger (20) aufweist,
wobei das Gerät (10) elektronische Komponenten und Software zur Erweiterung des Gerätes (10) zum digitalen Schreib- und/oder Eingabegerät aufweist,
wobei das Gerät (10) mindestens eine Verortungseinheit aufweist,
wobei durch die Verortungseinheit eine Verortung zwischen dem Gerät (10) und einem Aufzeichnungträger (20) ausgebildet ist,
**dadurch gekennzeichnet,**
**dass** die Verortungseinheit mindestens ein Inertial Measurement, IMU, (102), ein Kamerabezugssystem, einen Mikrocontroller (110) und eine Auswertesoftware zur absoluten Verortung des Gerätes (10) gegenüber/zum Aufzeichnungsträgers (20) aufweist,
**dass** die Verortung als Verortung von mindestens drei Kantenlinien des Aufzeichnungsträgers (20) für die analogen Aufzeichnungen (202) ausgebildet ist,
**dass** das Gerät (10) mindestens eine Bewegungserfassungseinheit aufweist, dass durch die Bewegungserfassungseinheit die Bewegungen des Gerätes (10) und damit erzeugten analogen Aufzeichnungen (202) im Koordinatensystem des Aufzeichnungsträger (20) digital erfasst sind,
**dass** die Bewegungserfassungseinheit als ein Laser-Speckle-Motion-Tracker (103) ausgebildet ist,
**dass** der Lasertracker als XY-Tracker (103) ausgebildet ist
und **dass** der XY-Tracker (103) als eine 2D-Erfassungseinheit ausgebildet ist, zur Erfassung der Daten X, Y in einem karthesischen Koordinatensystem X, Y als eine Funktion der Zeit t,
und **dass** das Gerät (10) als elektronische Komponente einen Abstandsmesser (105) zur Erfassung des Abstandes (h) zwischen Aufzeichnungsträger (20) und Stiftspitze ausgebildet ist, zur exakten Berechnung oder Extrapolation höhenbedingter Verzerrung/Ungenauigkeiten, dass der Abstand (h) als eine Funktion der Zeit (t) vorliegt
und **dass** der Abstandsmesser (105) als ein lasergestützter Abstandsmesser (105) ausgebildet ist.

2. Gerät nach Anspruch 1,
**dadurch gekennzeichnet,**
**dass** mit den elektronischen Komponenten und Software mindestens ein IMU (102), ein Kamerabezugssystem, ein Mikrocontroller (110), ein Lasertracker (103) und eine Auswertesoftware umfasst sind
und **dass** die elektronischen Komponenten und Software über eine Platine und/oder sonstige leitfähige Verbindungen miteinander in Verbindung stehen.

3. Gerät nach mindestens einem der vorstehenden Ansprüche,
**dadurch gekennzeichnet,**
**dass** die Auswertesoftware als eine Sensor-/Datenfusionseinheit ausgebildet ist
und **dass** Daten der Verortungseinheit und der Bewegungserfassungseinheit durch die Sensor-Datenfusionseinheit zusammengeführt sind.

4. Gerät nach Anspruch 1,
**dadurch gekennzeichnet,**
**dass** das Gerät (10) als weitere elektronische Komponenten und Software mindestens einen Prozessor (110), einen Sensor, eine Datenspeichereinheit (114), eine Energiequelle (107), eine Ladekontrolle (106), ein Spiegelelement (104), einen On-/Off-Schalter (101), einen Signalgeber (115), ein Mikrofon (116) und/oder eine Datenübertragungseinheit (109) aufweist.

5. Gerät nach Anspruch 4,
**dadurch gekennzeichnet,**
**dass** der mindestens eine Sensor als Kontaktsensor ausgebildet ist
und **dass** der Kontaktsensor als ein Drucksensor (113) und/oder Dehnmessstreifen zur Aktivierung des Gerätes (10) bei Kontakt mit dem Aufzeichnungsträger (20) ausgebildet ist.

6. Gerät nach Anspruch 4,
**dadurch gekennzeichnet,**
**dass** die Datenübertragungseinheit (109) als ein Kommunikationsbaustein zur Übertragung von erfassten und bearbeiteten Daten an ein digitales Endgerät (30) ausgebildet ist
und **dass** die Einheit (109) als eine Bluetooth-Einheit , WLAN-Kopplung oder Kabelverbindung ausgebildet ist.

7. Gerät nach Anspruch 4,
**dadurch gekennzeichnet,**
**dass** der Signalgeber (115) als ein akustischer und/oder optischer Signalgeber (115) ausgebildet ist.

8. **Eingabesystem (1)** mindestens bestehend aus einem elektronischen Gerät (10) nach Anspruch 1, einem Aufzeichnungsträger (20) und einem digitalem Endgerät (30).

9. **Verfahren zur Digitalisierung analog aufgezeichneter Daten die mit einem elektronischem Gerät nach Anspruch 1** aufgezeichnet werden, zum simultanen Erfassen von analogen und digitalen Daten umfassend folgende Schritte:
Schritt 1: Aktivierung des elektronischen Gerätes (10)
Schritt 2: Kalibrierung des Inertial Measurement, IMU-Sensors (102) zum Kamerabezugssystem kalibriert wobei
dies über die Verortung der Kamera/Kamerabezugssystem über die Erfassung und Speicherung von mindestens drei Kantenlinien des Aufzeichnungsträgers geschieht,
Schritt 3: Das elektronische Gerät (10) erkennt den Status "Gerät auf Aufzeichngsträger (20)" über Kontaktsensor.
Schritt 4: Bewegungen/Feinbewegungen in Form von analogen Aufzeichnungen (202) des elektronischen Gerätes (10) bzw. dessen Schreibspitze (111) werden mittels Laser-Speckle-Motion-Tracker (103) im verorteten Aufzeichnungsträger (20) erfasst und als Daten gespeichert, verarbeitet und/oder digitalisiert.
Schritt 5: Absolute Verortung der Lage der Schreibspitze (111) des Gerätes (10) im Status "Gerät (10) auf Aufzeichnungsträger (20)" im Koordinatensystem des Aufzeichnungsträgers (20), über mindestens eine sichtbare/erfassbare Ecke (204) und zwei sichtbare/erfassbare daran anliegende Kanten (203) des Aufzeichnungsträgers (20) für das Kamerasystem, zur Erfassung der Position X, Y des Gerätes (20) erfassen.
Schritt 6: Elektronische Abstandmessung über einen lasergestützten Abstandsmesser (105) zur Erfassung des Abstandes (h) zwischen Aufzeichnungsträger (20) und Schreibspitze, zur exakten Berechnung oder Extrapolation höhenbedingter Verzerrung/Ungenauigkeiten,
wobei der Abstand (h) als eine Funktion der Zeit (t) vorliegt.
Schritt 7: Fusionierung der Sensordaten, zur Verortung der aufgezeichneten Feinbewegungen der Schreibspitze (111) beim analogen Schreib- oder Zeichenvorgangs mit Hilfe der im Schritt 5 berechneten Daten auf dem Aufzeichnungsträger (20) unter der Vorraussetzung, dass sowohl die Feinbewegungen der Schreibspitze (111) auf dem Aufzeichnungsträger (20) mittels Lasertracker (103) korrekt verfolgt und aufgezeichnet werden, als auch die absolute Verortung der Schreibspitze (111) auf dem Aufzeichnungsträger (20) durchgeführt ist.
Schritt 8: Abspeicherung von Bilddaten, hierbei werden die fusionierten Sensordaten der Feinbewegungen, im Status "Gerät (10) auf Aufzeichnungsträger (20)" aufgezeichnet und digitalisiert, und nahezu zeitgleich von einer Auswertesoftware als zeitabhängiger optisch dargestellten Datensatz gespeichert.
Schritt 9: Datensätze werden an ein beliebiges Endgerät (30) übermittelt, um dort rekonstruiert, weiter bearbeitet, aufbereitet und erneut gespeichert werden.

## Claims

1. Electronic device (10) for generating analog strokes and for digital storage of the analog strokes,
wherein the device (10) comprises components of a writing, drawing and/or colouring device for producing analog recordings (202) on a recording carrier (20),
wherein the device (10) comprises electronic components and software for expanding the device (10) into a digital writing and/or input device,
wherein the device (10) comprises at least one localisation unit,
wherein a localisation between the device (10) and a recording carrier (10) is formed by the localisation unit,
**characterised in that**
the localisation unit comprises at least one inertial measurement unit, IMU (102), a camera reference system, a microcontroller (110) and an evaluation software for absolute localisation of the device (10) relative / with respect to the recording carrier (20),
the localisation is formed as a localisation of at least three edge lines of the recording carrier (20) for the analog recordings (202),
the device (10) comprises at least one movement detection unit,
the movements of the device (10) and thus-generated analog recordings (202) in the co-ordinate system of the recording carrier (20) are digitally detected by the movement detection unit,
the movement detection unit is configured as a laser speckle motion tracker (103)
the laser tracker is configured as an XY tracker (103) and
the XY tracker (103) is configured as a 2D detection unit for detection of the data X, Y in a Cartesian co-ordinate system X, Y as a function of time t, and
the device (10) is constructed as an electronic component at a distance measuring device (105) for detecting the distance (h) between recording carrier (20) and stylus tip for precise calculation or extrapolation of distortions/inaccuracies caused by height,
the distance (h) is present as a function of time (t) and
the distance measuring device (105) is configured as a laser-supported distance measuring device (105).

2. Device according to claim 1,
**characterised in that**
at least one IMU (102), camera reference system, microcontroller (110), laser tracker (103) and evaluating software are comprised by the electronic components and software and
the electronic components and software are connected with one another by way of a circuitboard and/or other conductive connections.

3. Device according to at least one of the preceding claims,
**characterised in that**
the evaluating software is configured as a sensor unit/data fusion unit and
data of the localisation unit and of the movement detection unit are combined by the sensor/data fusion unit.

4. Device according to claim 1,
**characterised in that**
the device (10) comprises as further electronic components and software at least one processor (110), sensor, data storage unit (114), energy source (107), charge control (106), mirror element (104), on/off switch (101), signal transmitter (115), microphone (116) and/or data transmission unit (109).

5. Device according to claim 4,
**characterised in that**
the at least one sensor is configured as a contact sensor and
the contact sensor is configured as a pressure sensor (113) and/or strain gauge for activation of the device (10) on contact with the recording carrier (20).

6. Device according to claim 4,
**characterised in that**
the data transmission unit (109) is configured as a communications module for transmission of detected and processed data to a digital terminal (30) and
the unit (109) is configured as a Bluetooth unit, WLAN coupling or cable connection.

7. Device according to claim 4,
**characterised in that**
the signal transmitter (115) is configured as an acoustic and/or optical signal transmitter (115).

8. input system (1) consisting of at least an electronic device (10) according to claim 1, a recording carrier (20) and a digital terminal (30).

9. Method for digitalisation of analog recorded data which has been recorded by an electronic device according to claim 1, for simultaneous detection of analog and digital data, comprising the following steps:
Step 1: activation of the electronic device (10),
Step 2: calibration of the inertial measurement unit (IMU) sensor (102) for calibration to the camera reference system, wherein this is carried out by localisation of the camera / camera reference system by way of detection and storage of at least three edge lines of the recording carrier,
Step 3: the electronic device (10) recognises the status of'device on recording carrier (20)' by way of contact sensor,
Step 4: movements / fine movements in the form of analog recordings (202) of the electronic device (10) or the writing tip (111) thereof are detected by means of laser speckle motion tracker (103) in the localised recording carrier (20) and stored, processed and/or digitalised as data,
Step 5: absolute localisation of the position of the writing tip (111) of the device (10) in the status of 'device (10) on recording carrier (20)' in the co-ordinate system of the recording carrier (20) by way of at least one visible/detectable corner (204) and two visible/detectable edges (203), which lie thereat, of the recording carrier (20) for the camera system, for detection of the position X, Y of the device (20),
Step 6: electronic distance measurement by way of a laser-supported distance measuring device (105) for detection of the distance (h) between recording carrier (20) and writing tip for exact calculation or extrapolation of distortions/inaccuracies caused by height, wherein the distance (h) is present as a function of time (t),
Step 7: Fusion of the sensor data for localisation of the recorded fine movements of the writing tip (111) during the analog writing or drawing process with the help of the data, which is calculated in Step 5, on the recording carrier (20) with the precondition that not only the fine movements of the writing tip (111) on the recording carrier (20) are correctly tracked and recorded by means of laser tracker (103), but also the absolute localisation of the writing tip (111) on the recording carrier (20) is carried out,
Step 8: storage of image data, in that case the fused sensor date of the fine movements in the status of 'device (10) on recording carrier (20)' are recorded and digitalised and almost simultaneously stored by evaluation software as a time-dependent optically illustrated data set,
Step 9: data sets are communicated to a desired terminal (30) so as to be reconstructed, further processed, prepared and freshly stored thereat.

## Revendications

1. Appareil électronique (10) pour générer des prélèvements analogiques et pour stocker numériquement les prélèvements analogiques,
l'appareil (10) présentant des composants d'un appareil d'écriture, de dessin et/ou de peinture pour la création d'enregistrements analogiques (202) sur un support d'enregistrement (20),
l'appareil (10) présentant des composants électroniques et un logiciel pour étendre l'appareil (10) à un appareil d'écriture et/ou de saisie numérique,
l'appareil (10) présentant au moins une unité de localisation,
l'unité de localisation réalisant une localisation entre l'appareil (10) et un support d'enregistrement (20),
**caractérisé en ce que**
l'unité de localisation présente au moins une mesure inertielle, IMU, (102), un système de référence de caméra, un microcontrôleur (110) et un logiciel d'évaluation pour une localisation absolue de l'appareil (10) par rapport au support d'enregistrement (20),
la localisation est réalisée sous la forme d'une localisation d'au moins trois lignes de bord du support d'enregistrement (20) pour les enregistrements analogiques (202),
l'appareil (10) présente au moins une unité de détection de mouvement, **en ce que** les mouvements de l'appareil (10) et les enregistrements analogiques (202) ainsi générés sont détectés numériquement dans le système de coordonnées du support d'enregistrement (20) par l'unité de détection de mouvement,
l'unité de détection de mouvement est conçue sous la forme d'un traqueur laser de mouvement-granularité (103),
le traqueur laser est réalisé sous la forme d'un traqueur XY (103),
et **en ce que** le traqueur XY-(103) est réalisé sous la forme d'une unité de détection 2D,
pour la détection des données X, Y dans un système de coordonnées cartésien X, Y en fonction du temps t,
et **en ce que** l'appareil (10) est réalisé sous la forme d'un composant électronique d'un télémètre (105) pour détecter la distance (h) entre le support d'enregistrement (20) et une pointe de stylet , pour le calcul exact ou l'extrapolation de la distorsion/des inexactitudes liées à la hauteur, **en ce que** la distance (h) est en fonction du temps (t), et **en ce que** le télémètre (105) est réalisé sous la forme d'un télémètre (105) assisté par laser.

2. Appareil selon la revendication 1,
**caractérisé en ce que**
les composants électroniques et le logiciel comprennent au moins une IMU (102), un système de référence de caméra, un microcontrôleur (110), un traqueur laser (103) et un logiciel d'évaluation,
et **en ce que** les composants électroniques et le logiciel sont connectés les uns aux autres via une carte de circuit imprimé et/ou d'autres connexions conductrices.

3. Appareil selon au moins l'une quelconque des revendications précédentes, **caractérisé en ce que**
le logiciel d'évaluation est réalisé sous la forme d'une unité de capteur/fusion de données,
et **en ce que** les données de l'unité de localisation et de l'unité de détection de mouvement sont fusionnées par l'unité de capteur-fusion de données.

4. Appareil selon la revendication 1,
**caractérisé en ce que**
l'appareil (10) présente comme autres composants électroniques et logiciel au moins un processeur (110), un capteur, une unité de stockage de données (114), une source d'énergie (107), un contrôle de charge (106), un élément de miroir (104), un interrupteur marche/arrêt (101), un générateur de signal (115), un microphone (116) et/ou une unité de transmission de données (109).

5. Appareil selon la revendication 4,
**caractérisé en ce que**
le au moins un capteur est réalisé sous la forme d'un capteur de contact,
et **en ce que** le capteur de contact est réalisé sous la forme d'un capteur de pression (113) et/ou de jauges de contrainte pour activer l'appareil (10) par contact avec le support d'enregistrement (20).

6. Appareil selon la revendication 4,
**caractérisé en ce que**
l'unité de transmission de données (109) est réalisée sous la forme d'un module de communication pour transmettre les données détectées et traitées à un terminal numérique (30),
et **en ce que** l'unité (109) est conçue sous la forme d'une unité Bluetooth, d'un couplage WLAN ou d'une connexion par câble.

7. Appareil selon la revendication 4,
**caractérisé en ce que**
le générateur de signal (115) est réalisé sous la forme d'un générateur de signal acoustique et/ou optique (115).

8. Système de saisie (1) comprenant au moins un appareil électronique (10) selon la revendication 1, un support d'enregistrement (20) et un terminal numérique (30).

9. Procédé de numérisation de données enregistrées de manière analogique qui sont enregistrées à l'aide d'un appareil électronique selon la revendication 1, pour la détection simultanée de données analogiques et numériques, comprenant les étapes suivantes :
Étape 1 : Activation de l'appareil électronique (10)
Étape 2 : Calibrage du capteur de mesure inertielle, IMU, (102) calibré pour le système de référence de caméra,
qui survient via la localisation de la caméra/du système de référence de la caméra via la détection et le stockage d'au moins trois lignes de bord du support d'enregistrement,
Étape 3: Le dispositif électronique (10) détecte l'état « appareil sur support d'enregistrement (20) » via le capteur de contact,
Étape 4: Les mouvements/mouvements fins sous la forme d'enregistrements analogiques (202) de l'appareil électronique (10) ou de sa pointe d'écriture (111) sont détectés dans le support d'enregistrement localisé (20) et stockés, traités et/ou numérisés sous forme de données au moyen d'un traqueur laser de mouvement-granularité (103).
Étape 5 : La position absolue de la pointe d'écriture(111) de l'appareil (10) dans l'état « Appareil (10) sur support d'enregistrement (20) » est détectée dans le système de coordonnées du support d'enregistrement (20), via au moins un coin visible/détectable (204) et deux bords visibles/détectables (203) s'y raccordant du support d'enregistrement (20) pour le système de caméra, afin de détecter la position X, Y de l'appareil (20).
Étape 6 : La mesure électronique de la distance à l'aide d'un télémètre laser (105) pour détecter la distance (h) entre le support d'enregistrement (20) et la pointe d'écriture, pour le calcul exact ou l'extrapolation de la distorsion/des inexactitudes liées à la hauteur, la distance (h) étant fonction du temps (t).
Étape 7 : La fusion des données de capteur, pour localiser les mouvements fins enregistrés de la pointe d'écriture (111) lors du processus d'écriture ou de dessin analogique à l'aide des données calculées à l'étape 5 sur le support d'enregistrement (20), à condition que les mouvements fins de la pointe d'écriture (111) sur le support d'enregistrement (20) soient correctement suivis et enregistrés au moyen d'un traqueur laser (103), ainsi que la localisation absolue de la pointe d'écriture (111) sur le support d'enregistrement (20).
Étape 8 : Le stockage de données d'image, les données de capteur fusionnées des mouvements fins étant enregistrées et numérisées dans l'état « Appareil (10) sur support d'enregistrement (20) », et stockées presque simultanément par un logiciel d'évaluation en tant qu'ensemble de données optiquement représentées en fonction du temps.
Étape 9 : Les ensembles de données sont transmis à n'importe quel terminal (30) pour y être reconstruits, traités davantage, préparés et à nouveau stockés.
